# EUROPÄISCHE PATENTSCHRIFT

(11) **EP 1 646 473 B1**
(45) Veröffentlichungstag und Bekanntmachung des Hinweises auf die Patenterteilung: **23.04.2008**
(21) Anmeldenummer: 04740779.6
(22) Anmeldetag: 08.07.2004
(51) Int. Cl.: B23K 9/20

(54) **FÜGEVORRICHTUNG**
JOINING DEVICE
DISPOSITIF D'ASSEMBLAGE

(30) Priorität: 17.07.2003 DE 10333415
(43) Veröffentlichungstag der Anmeldung: 19.04.2006
(73) Patentinhaber: Newfrey LLC, Newark, Delaware 19711 (US)
(72) Erfinder: SCHUG, Alexander, 35460 Staufenberg (DE); KORTMANN, Hans-Gerhard, 38159 Vechelde (DE)
(74) Vertreter: Haar, Lucas Heinz Jörn
(86) Internationale Anmeldenummer: PCT/EP2004/007472
(87) Internationale Veröffentlichungsnummer: WO 2005/014219

(56) Entgegenhaltungen:
- WO-A-01/62425
- WO-A-01/62426
- DE-A- 3 542 069
- DE-A- 4 400 350
- DE-A- 10 138 947

## Beschreibung

Die vorliegende Erfindung betrifft eine Fügevorrichtung zum Fügen, insbesondere zum Schweißen, von zwei Werkstücken aneinander, mit einem Fügekopf, der eine Hubvorrichtung zum linearen Verfahren einer Fügeeinheit entlang einer Hubachse relativ zum Fügekopf aufweist, wobei die Fügevorrichtung einen Fügevorgang durch Verfahren der Fügeeinheit aus einer Hubstellung in Richtung einer Grundstellung ausführt und die Fügeeinheit einen außerhalb des Fügekopfes verlaufenden Ausleger aufweist, an dessen freiem Ende der Fügevorgang parallel versetzt zur Hubachse erfolgt.

Ferner betrifft die Erfindung ein Verfahren zum Fügen, insbesondere zum Schweißen, von zwei Werkstücken aneinander, das die folgenden Schritte aufweist: Verfahren einer Fügeeinheit relativ zu einem Fügekopf in eine Hubstellung mittels einer Hubvorrichtung, um in Richtung einer Grundstellung der Fügeeinheit die Werkstücke miteinander zu fügen, und Verfahren der Fügeeinheit in die Grundstellung. Eine solche Fügevorrichtung und ein solches Fügeverfahren sind aus der EP 0 367 414 B1 bekannt.

Unter Fügen versteht man im fertigungstechnischen Sinne ein Verfahren zur form-, kraft- oder stoffschlüssigen Verbindung zweier oder mehrerer Werkstücke oder von Werkstükken mit einem formlosen Stoff durch Zusammenlegen (z.B. Ineinanderschieben, Einhängen), An- und Einpressen (z.B. Schrauben, Keilen, Schrumpfen), Stoffverbinden (z.B. Schweißen, Löten, Kleben), Urformen (z.B. Einschmelzen, Eingießen), Umformen (z.B. Bördeln) oder Füllen (z.B. Tränken einer elektrischen Wicklung).

Beim Kurzzeit-Lichtbogenschweißen wird ein Element auf ein Bauteil aufgeschweißt. Dabei wird ein Lichtbogen zwischen dem Element und dem Bauteil gebildet, der die Stirnflächen anschmilzt. Anschließend werden das Element und das Bauteil aufeinander zu bewegt, so dass sich die Schmelzen vermischen. Der Lichtbogen wird kurzgeschlossen, und die Gesamtschmelze erstarrt.

Es ist möglich, den Lichtbogen zu ziehen (Hubzündung). Dabei wird das Element zunächst auf das Bauteil aufgesetzt (Grundstellung). Anschließend wird ein Pilotstrom eingeschaltet, und das Element wird gegenüber dem Bauteil bis auf eine gewünschte Höhe angehoben (Hubstellung), wobei ein Lichtbogen gezogen wird. Erst danach wird der Schweißstrom zugeschaltet und das Element wieder auf das Bauteil aufgesetzt, wobei sich die Schmelzen vermischen. Anschließend wird der Schweißstrom abgeschaltet, so dass sich die Gesamtschmelze verfestigt.

Um gleichbleibend gute Schweißergebnisse zu erzielen, ist es unter anderem wichtig, die Relativstellung zwischen Element und Bauteil zu kennen, insbesondere das Element auf die richtige Höhe anzuheben, bevor der Schweißstrom zugeschaltet wird. Zu diesem Zweck erfolgt in der Regel vor jedem Schweißvorgang eine Messung der Relativstellung, insbesondere in Form einer Nullpositionsbestimmung.

Dies ist bei roboter-basierten Systemen von besonderer Bedeutung. Zwar sind moderne Roboter generell in der Lage, vergleichsweise präzise zu positionieren. Eine hohe Präzision lässt sich jedoch insbesondere aufgrund der hohen bewegten Massen nicht mit sehr hoher Dynamik erzielen. Üblicherweise haben die Roboter einen Bewegungsumfang in drei Koordinaten. Im einfachsten Fall ist ein Roboter eine automatisiert angetriebene Linearführung (Schlitten), an der ein Schweißkopf gelagert ist. In der Regel ist ein solcher Schlitten am Arm eines mehrachsigen Roboters (Knickarmroboter) angebracht.

In der Kraftfahrzeugindustrie werden Bolzenschweißsysteme eingesetzt. Sie dienen dort vor allem dazu, Elemente wie Bolzen mit und ohne Gewinde, Ösen, Muttern etc. auf das Karosserieblech aufzuschweißen. Diese Elemente dienen dann als Halteanker, um beispielsweise Innenraumverkleidungen, Kabelbäume oder ähnliches zu befestigen.

In der Kraftfahrzeugindustrie kommt es maßgeblich auf die Herstellungsgeschwindigkeit an. Innerhalb weniger Minuten sind Hunderte von Elementen an unterschiedlichen Positionen automatisiert mittels Robotern aufzuschweißen. Die Roboter müssen folglich mit hoher Dynamik bewegt werden.

Daher ist es bekannt, am Arm eines Roboters eine Schweißkopfbasis anzubringen, die einen Schlitten trägt. Der Schlitten ist hochdynamisch beweglich, üblicherweise mittels eines pneumatischen oder hydraulischen Systems. An dem Schlitten ist der eigentliche Schweißkopf gelagert, der wiederum über eine Hubvorrichtung zum Bewegen des Elementes mit hoher Präzision verfügt.

Zum Bestimmen der Relativlage zwischen dem Element und dem Bauteil ist es bekannt, an dem Schweißkopf einen sogenannten Stützfuß zu befestigen (beispielsweise aus "Neue TUCKER-Technologie. Bolzenschweißen mit System", Emhart Tucker, September 1999).

Die räumliche Größe eines Schweißkopfes stellt jedoch eine natürliche räumliche Schranke dar, innerhalb der ein Bolzenschweißen mit Schweißköpfen möglich ist. Um Bolzen auch an schwer zugänglichen Orten schweißen zu können, sind aus dem Stand der Technik Schweißköpfe bekannt, die über ein Verlängerungskabel an eine Schweißpistole angeschlossen werden. Eine solcher Schweißkopf ist in der DE G 94 17 371 offenbart. Der Schweißkopf der DE G 94 17 371 ist viel kleiner als die mit ihm verbundene Schweißpistole. Dieser Schweißkopf eignet sich für Anwendungen, bei denen wenig Platz vorhanden ist.

Ein Nachteil bei dieser Art des Bolzenschweißens ist, dass die Schweißvorrichtung von Hand bedient werden muss. Sowohl die Schweißpistole als auch der über eine Verlängerung angeschlossene Schweißkopf müssen von einem Arbeiter per Hand positioniert und betätigt werden. Dies ist zeitaufwendig. Es macht sich auch in hohen Produktionskosten bemerkbar, da in der Regel Bedienpersonal teuer ist.

Es ist daher eine Aufgabe der Erfindung, eine Fügevorrichtung und ein Verfahren zu schaffen, womit auch an schwer zugänglichen Positionen automatisiert gefügt werden kann.

Die Aufgabe wird durch eine Fügevorrichtung der eingangs erwähnten Art gelöst, die dadurch gekennzeichnet ist, dass die Fügeeinheit relativ zum Fügekopf so orientiert ist, dass die Fügeeinheit in der Hubstellung ausgefahren ist.

Ferner wird die Aufgabe durch ein Verfahren zum Fügen der eingangs erwähnten Art gelöst, das dadurch gekennzeichnet ist, dass die Fügeeinheit relativ zum Fügekopf in die Hubstellung ausgefahren wird.

Auf diese Weise wird erreicht, dass man mit einem Fügekopf selbst schwer zugängliche Positionen automatisiert erreichen kann, um zu fügen. Die Erfindung ermöglicht es im Vergleich zum Stand der Technik nach "hinten" zu fügen. Die Orientierung "nach hinten" wird im Nachfolgenden erläutert werden. Außerdem können Zeit und Kosten gespart werden. Die Vorrichtung und das Verfahren gemäß der vorliegenden Erfindung eröffnen eine Vielzahl von Anwendungen, bei denen nur wenig Platz zum Fügen vorhanden ist.

Es ist bevorzugt, wenn die Fügeeinheit relativ zum Fügekopf ferner so orientiert ist, dass die Fügevorrichtung in der Grundstellung eingefahren ist.

Gemäß einer bevorzugten Ausführungsform weist der Fügekopf eine Haltevorrichtung zum Halten eines der Werkstücke auf.

Ferner ist es bevorzugt, wenn ein gehaltenes Werkstück ein Bolzen und die Haltevorrichtung ein Bolzenhalter ist.

Außerdem ist es von Vorteil, wenn der Fügekopf ein Schweißkopf ist. Durch diese Maßnahmen es möglich die Fügevorrichtung als Lichtbogenschweißvorrichtung zu benutzen, die insbesondere Bolzen auf ein Werkstück schweißen kann.

Gemäß einer bevorzugten weiteren Ausführungsform weist der Fügekopf einen Stützfuß auf.

Ein zusätzlich vorgesehener Stützfuß erleichtert das Positionieren des Fügekopfes relativ zu dem Werkstück, an das das andere Werkstück angebracht wird.

Ferner ist es bevorzugt, wenn der Fügekopf an einem Schlitten angebracht ist. Somit ist es möglich, den Fügekopf, und somit die Fügeeinheit, rasch in die Grundstellung zu verfahren.

Gemäß einer weiteren Ausführungsform weist die Fügevorrichtung ferner eine Werkstückzuführung, insbesondere eine Elementenzuführung, auf. Dies erhöht ebenfalls die Geschwindigkeit eines Arbeitszykluses, da Werkstücke nicht von Hand sondern automatisiert zugeführt werden können.

Es hat sich auch als vorteilhaft erwiesen, wenn die Hubvorrichtung eine Druckfeder aufweist, die mittels eines Linearmotors spannbar ist. Ferner ist der Linearmotor in der Hubstellung ausgefahren. Durch diese Vorkehrungen ist es möglich, nach "hinten" zu schweißen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Ansicht eines Schweißkopfes gemäß dem Stand der Technik mit einem Ausleger, der nach vorn schweißt;
- Fig. 2-5: eine schematische Darstellung eines Fügevorgangs mit einer Fügevorrichtung gemäß der vorliegenden Erfindung; und
- Fig. 6: eine weitere Ausführungsform der Fügevorrichtung gemäß der Erfindung.

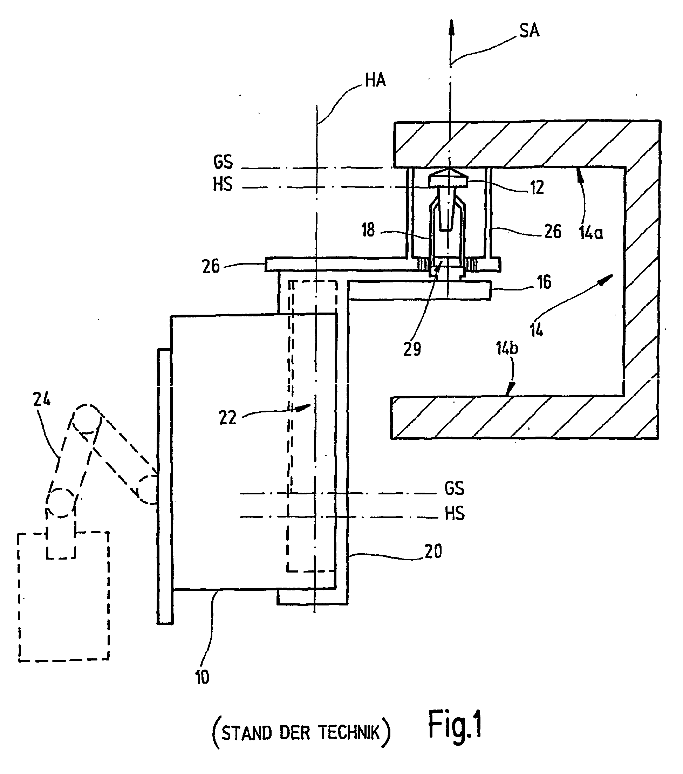

In Fig. 1 ist ein aus dem Stand der Technik bekannter Schweißkopf 10 gezeigt, der nach "vorn" schweißt und geeignet ist, bei Anwendungen verwendet zu werden, bei denen nicht ausreichend Platz vorhanden ist, um den gesamten Schweißkopf 10 direkt über einer Schweißstelle zu positionieren. Beispielsweise kann es erforderlich sein, dass ein Bolzen 12 in eine Öffnung eines Werkstücks 14, etwa eines Rohrs, geschweißt werden soll, in das der Schweißkopf 10 nicht hineinpasst.

Um den Bolzen 12 trotz des Platzmangels automatisiert mit dem Schweißkopf 10 schweißen zu können, ist am oberen Teil des Schweißkopfs 10 ein Ausleger 16 angebracht, der mit einem Bolzenhalter 18 verbunden ist. Mittels des Auslegers 16 ist es möglich, dass eine Schweißachse SA parallel versetzt zu einer Hubachse HA ist. So wird erreicht, dass der Schweißkopf 10 nicht in die Öffnung des Rohrs 14 eingebracht werden muss, um den Bolzen entlang der Schweißachse SA nach vorn zu schweißen, wie es durch die Pfeilspitze an der Schweißachse SA angedeutet ist, sondern außerhalb des Rohrs 14 positioniert werden kann.

Ferner weist der Schweißkopf 10 eine Hubvorrichtung 20 auf, mittels der eine Schweißeinheit 22 entlang der Hubachse HA verfahrbar ist. In der Fig. 1 umfasst die Schweißeinheit 22 den Ausleger 16, den Bolzenhalter 18 und ein Element, das in der Hubvorrichtung 20 verfahrbar gelagert ist. In der Fig. 1 ist teilweise durch eine gestrichelte Linie das Innere der Hubvorrichtung 20 dargestellt. Die Hubvorrichtung 20 kann die Schweißeinheit 22 in ihrem Inneren beispielsweise mit einem Linearmotor (nicht dargestellt) entlang der Hubachse HA verfahren.

Fig. 1 zeigt die Situation, in der die Schweißeinheit 22 vollständig nach "vorn" gefahren ist. "Vorn" bedeutet nach oben in der Zeichenebene der Fig. 1. Im Inneren der Hubvorrichtung 20 ist genügend Raum nach hinten, um die Schweißeinheit 22 aus einer Grundstellung GS in eine Hubstellung HS zu verfahren. Die Grundstellung GS und die Hubstellung HS sind in der Fig. 1 durch horizontale, gestrichelte Linien angedeutet.

Nachfolgend wird bezugnehmend auf Fig. 1 grob der Ablauf eines Schweißvorgangs erläutert werden.

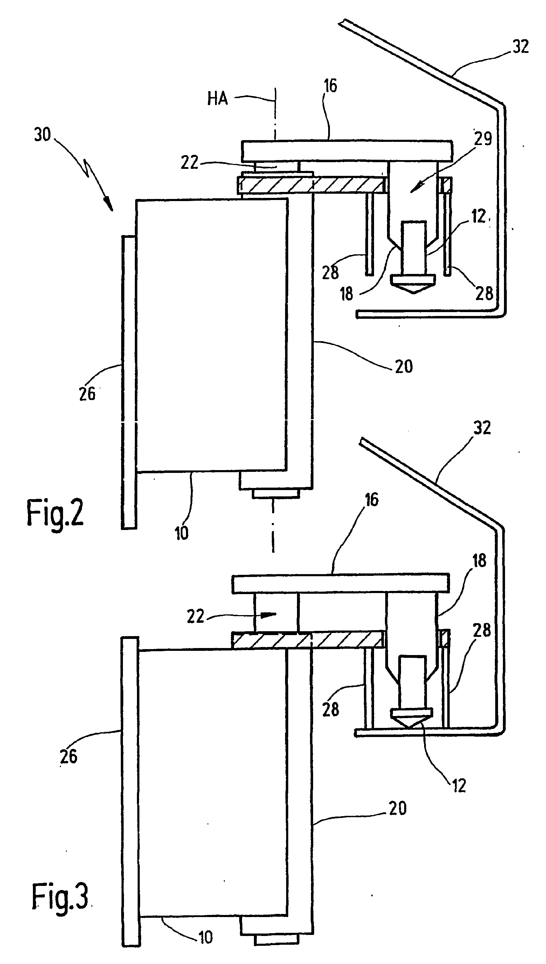

Der Schweißkopf 10 kann z.B. mittels eines Roboters 24 der eingangs erwähnten Art zuerst in eine Position gefahren, von wo aus der Schweißkopf mit Hilfe eines Schlittens 26, der z.B. elektrisch oder pneumatisch betrieben werden kann, in die Grundstellung GS gefahren wird (vgl. auch Positionierung des Schweißkopfes 10 zum Schlitten 26 in den Fig. 2 und 3).

Dazu kann am Schweißkopf 10 ein Mundstück 28 angebracht sein. Das Mundstück 28 ist in der Fig. 1 fest mit dem Schweißkopf 10 verbunden und weist eine Öffnung 29 auf, durch die der Bolzenhalter 18 greift. Bevor das Mundstück 28 auf der Innenseite des oberen Abschnitts 14a des Rohrs 14 aufsetzt, ist es möglich, dass der Bolzen 12 über eine weitere Öffnung des Mundstücks 28 hinausragt (vgl. auch Fig. 2). Die Schweißeinheit 22, und somit der Bolzen 12, der von dem Bolzenhalter 18 gehalten wird, bewegt sich in dem Moment, wenn das Mundstück 28 auf dem Werkstück 14a aufsetzt, um ein entsprechendes Stück nach unten bzw. hinten, womit sich sowohl das Mundstück 28 als auch die Schweißeinheit 22 in der Grundstellung befindet.

Ein Mundstück wird üblicherweise dann benutzt, wenn mit Schutzgas gearbeitet wird, um bessere Schweißresultate zu erhalten. Dazu bildet das Mundstück einen Raum um die Schweißstelle, um das Schutzgas dort zu sammeln. Das Mundstück 28 kann gleichzeitig als Stützfuß dienen. Mit Hilfe eines Stützfußes wird ein Schweißkopf in seine Grundstellung gefahren.

Nachdem die Schweißeinheit 22 in die Grundstellung GS gebracht ist, wird sie von der Hubvorrichtung 20 in die Hubstellung HS verfahren. Wenn der Bolzen 12 und das Rohr 14 genügend angeschmolzen sind, wird der Bolzen 12 in Schweißrichtung, d.h. aus der Hubstellung HS in Richtung der Grundstellung GS verfahren.

Die hier abgebildeten Größenverhältnisse sind jedoch nicht maßstabsgetreu. In der Regel ist der Schweißkopf 10 viel größer als der Bolzen 12 und der Bolzenhalter 18.

Mit einer Vorrichtung gemäß der Fig. 1 ist es somit möglich, an schwer zugänglichen Orten, automatisiert in "Vorwärtsrichtung" zu schweißen, wobei die Schweißachse SA parallel versetzt zur Hubachse HA liegt. Diese Art des Schweißens ist jedoch dann nicht möglich, wenn der in der Fig. 1 unten dargestellte Abschnitt 14b des Werkstücks 14 sich so weit in der Fig. 1 nach links erstreckt, dass Arbeiten ein von "unten" mit einem Schweißkopf 10 nicht mehr möglich ist.

Bezugnehmend auf die Fig. 2 bis 5 wird das Verfahren zum Fügen von zwei Werkstükken aneinander erklärt werden.

In Fig. 2 ist eine schematische Fügevorrichtung allgemein mit 30 bezeichnet. Die Fügevorrichtung 30 umfasst eine Fügeeinheit 22, einen Fügekopf 10 und eine Hubvorrichtung 20. Die Fügevorrichtung 30 soll anhand einer Vorrichtung zum Lichtbogenschweißen erklärt werden. Dies stellt jedoch keine Einschränkung auf Lichtbogenschweißen dar. Andere Anwendungsmöglichkeiten werden gegen Ende der Beschreibung noch erläutert werden.

Das Werkstück der Fig. 2 kann beispielsweise ein Kofferraumdeckel 32 eines Kraftfahrzeugs sein, an den Bolzen anzubringen sind. In die Zeichenebene der Fig. 2 hinein erstreckt sich die Längsrichtung des Kofferraumdeckels 32. Man erkennt in der Fig. 3 eine schematische Schnittansicht von der Seite.

Der Bolzen 12 soll in der Mitte der Längsrichtung des Kofferraumdeckels 32 angebracht werden. Mit einem Schweißkopf gemäß der Fig. 1 kann nicht gearbeitet werden, da dieser lediglich für Schweißstellen verwendbar ist, die sich am äußeren seitlichen Rand des Deckels 32 befinden. Ein Zugang von der in der Fig. 2 oben gelegenen Seite mit einem Schweißkopf gemäß der Fig. 1 ist nicht möglich, da dieser dann den Kofferraumdeckel 32 durchstoßen müsste, um nach "vorn" schweißen zu können. Ein Zugang von unten macht keinen Sinn, da der Bolzen nicht auf die gegenüberliegende Seite im Deckel 32 geschweißt werden soll.

Der erfindungsgemäße Schweißkopf 10 entsprechend der Fig. 2 weist eine Hubeinrichtung 20 auf, die entlang einer Hubachse HA verfahrbar ist. An der Hubeinrichtung 20 ist ein Ausleger 16 angebracht, an den ein Bolzenhalter 18 mechanisch koppelt. Zusätzlich ist ein Mundstück 28 vorgesehen.

Der Schweißkopf 10 kann an einem Roboterarm (nicht dargestellt) montiert sein (vgl. Fig. 1). Um in die Schweißposition gefahren zu werden, kann der Roboterarm den Schweißkopf 10 dynamisch in eine Position in der Nähe der Schweißposition fahren. Diese Situation ist in der Fig. 2 dargestellt.

Der Schweißkopf 10 ist relativ zu einem Schlitten 26, mit dem er verbunden ist, maximal ausgefahren, d.h. in der Fig. 2 maximal nach oben gefahren. Der Bolzen 12 ragt über die weitere Öffnung des Mundstücks 28 hinaus und berührt den Kofferraumdeckel 32 nicht.

In der Fig. 3 wurde der Schweißkopf 10 mittels des Schlittens 26 nach unten verfahren, so dass der Bolzen 18 auf der Innenseite des Kofferraumdeckels 32 an der gewünschten Schweißstelle aufsitzt. Über den Bolzen 12 wird die Schweißeinheit 22 ein kleines Stück gegenüber dem Schweißkopf 10 ausgefahren. Man erkennt, dass im Vergleich zur Fig. 2 ein längerer Teil der Schweißeinheit 22 in Richtung der Hubachse HA aus dem Schweißkopf 10 herausragt. Der Bolzen 12, und somit auch die Schweißeinheit 22, befinden sich in der Fig. 3 in einer Grundstellung.

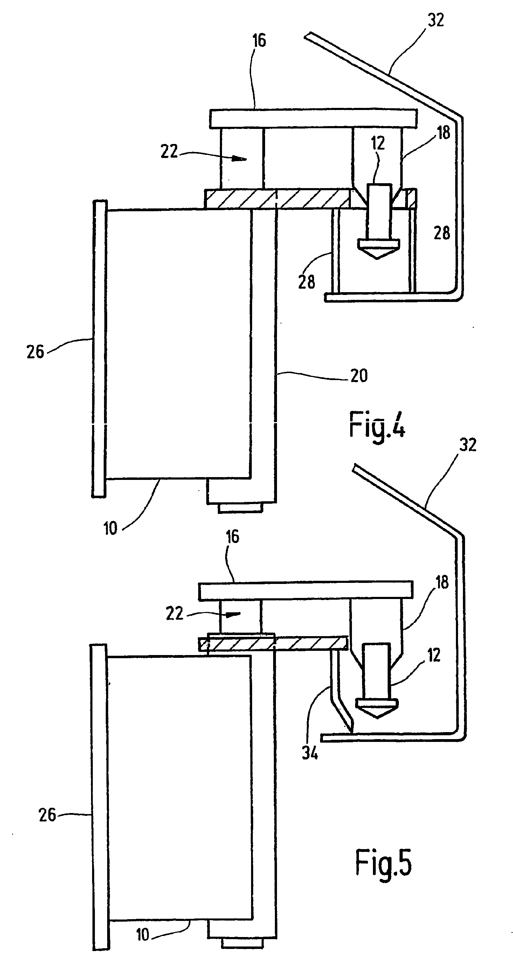

Um den Bolzen 12 in eine Hubstellung zu bringen, wird die Schweißeinheit 22 mittels der Hubvorrichtung 20 gegenüber dem Schweißkopf 10 ausgefahren. Die Schweißeinheit kann, muss aber nicht zwingend, voll ausgefahren werden. Dazu kann die Hubvorrichtung z.B. einen Linearmotor (nicht dargestellt) aufweisen, der die Schweißeinheit 22 gegen die Kraft einer Feder (nicht dargestellt) bewegt. Die Hubstellung ist in der Fig. 4 veranschaulicht. Die Schweißeinheit 22 wurde gegenüber der Fig. 3 noch weiter aus dem Schweißkopf 10 ausgefahren. Der Bolzen 12 berührt den Kofferraumdeckel 32 nicht mehr. Das Mundstück 28 sitzt aber auf dem Deckel 32 auf. Der Schweißstrom zum Schweißen kann nun eingeschaltet werden.

In der Fig. 5 ist die Situation gezeigt, bei der der Bolzen 12 mittels der Schweißeinheit 22 schon wieder in Richtung Kofferraumdeckel 32 bewegt wurde. Dazu wird die Schweißeinheit 22 eingefahren. Im Vergleich zur Fig. 4 erkennt man deutlich, dass der aus dem Schweißkopf 10 ragende Teil der Schweißeinheit 22 deutlich kürzer ist.

Außerdem wurde in der Fig. 5 das Mundstück 28 der Fig. 2 bis 4 gegen einen Stützfuß 34 ausgetauscht. Dies hat jedoch keinen Einfluss auf den Ablauf des Schweißens. Der Stützfuß 34 legt lediglich, genauso wie das Mundstück 28 die relative Position des Schweißkopfes 10 zum Deckel 32 fest.

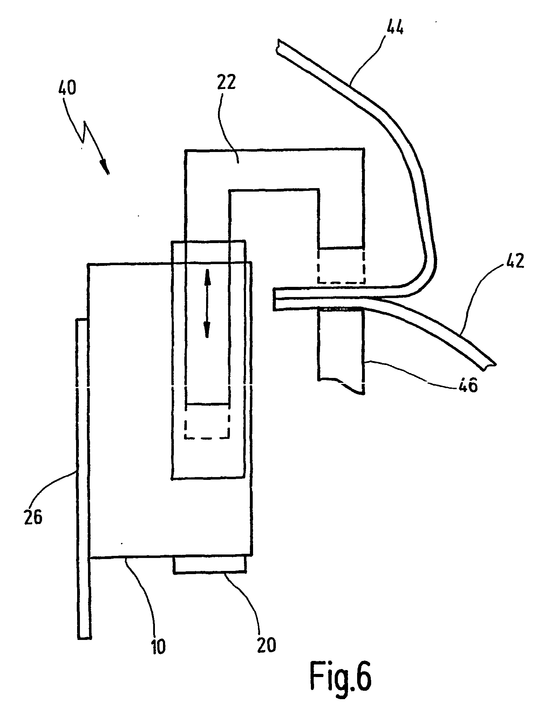

Es ist klar, dass die Erfindung nicht nur zum Lichtbogenschweißen verwendet werden kann. In Fig. 6 ist schematisch eine Punktschweißvorrichtung 40 gezeigt.

Mit der Punktschweißvorrichtung 40 können zwei Werkstücke 42 und 44 zusammengeschweißt werden. Die Vorrichtung 40 weist einen Schweißkopf 10, eine Hubvorrichtung 20 und eine Schweißeinheit 22 auf, die in eine Hubstellung aus dem Schweißkopf 10 verfahrbar ist. Des Weiteren ist eine Gegenelektrode 46 vorgesehen, die der Schweißeinheit 22 im Bereich einer Schweißstelle gegenüber angeordnet ist. Die Verfahrmöglichkeit wird durch die gestrichelten Linien an der Schweißeinheit 22 dargestellt.

Es besteht ferner die Möglichkeit mit und ohne Stützfuß, mit und ohne Mundstück oder mit und ohne Schutzgas zu schweißen. Durch das Umkehren der Schweißrichtung bleiben alle Funktonen und Vorteile des Schweißkopfes erhalten.

Die Erfindung kann aber auch im Bereich des Nietens, z.B. bei Blindnieten, und des Stanzen eingesetzt werden.

## Patentansprüche

1. Fügevorrichtung (30, 40) zum Fügen, insbesondere zum Schweißen, von zwei Werkstücken (12, 32, 42, 44) aneinander, mit
- einem Fügekopf (10), der eine Hubvorrichtung (20) zum linearen Verfahren einer Fügeeinheit (22) entlang einer Hubachse (HA) relativ zum Fügekopf aufweist, wobei die Fügevorrichtung einen Fügevorgang durch Verfahren der Fügeeinheit (22) aus einer Hubstellung (HS) in Richtung einer Grundstellung (GS) ausführt und die Fügeeinheit (22) einen außerhalb des Fügekopfes (10) verlaufenden Ausleger (16) aufweist, an dessen freiem Ende der Fügevorgang parallel versetzt zur Hubachse (HA) erfolgt,
**dadurch gekennzeichnet, dass**
- die Fügeeinheit (22) relativ zum Fügekopf (10) so orientiert ist, dass die Fügeeinheit (22) in der Hubstellung (HS) gegenüber dem Fügekopf (10) ausgefahren ist.

2. Fügevorrichtung nach Anspruch 1, **dadurch gekennzeichnet, dass** die Fügeeinheit (22) relativ zum Fügekopf (10) ferner so orientiert ist, dass die Fügeeinheit (22) in der Grundstellung (GS) in den Fügekopf (10) eingefahren ist.

3. Fügevorrichtung nach Anspruch 1 oder 2, **dadurch gekennzeichnet, dass** die Fügeeinheit (22) eine Haltevorrichtung (18) zum Halten eines der Werkstücke (12, 32, 42, 44) aufweist.

4. Fügevorrichtung nach Anspruch 3, **dadurch gekennzeichnet, dass** ein gehaltenes Werkstück (12, 32, 42, 44) ein Bolzen (12) und die Haltevorrichtung ein Bolzenhalter (18) ist.

5. Fügevorrichtung nach einem der vorherigen Ansprüche, **dadurch gekennzeichnet, dass** der Fügekopf (10) ein Schweißkopf ist.

6. Fügevorrichtung nach einem der vorherigen Ansprüche, **dadurch gekennzeichnet, dass** der Fügekopf (10) ferner einen Stützfuß (34) aufweist, der in Fügerichtung vorsteht.

7. Fügevorrichtung nach einem der vorherigen Ansprüche, **dadurch gekennzeichnet, dass** der Fügekopf (10) an einem Schlitten (26) angebracht ist.

8. Fügevorrichtung nach einem der vorherigen Ansprüche, **dadurch gekennzeichnet, dass** die Fügevorrichtung (30, 40) ferner eine Werkstückzuführung, insbesondere eine Elementenzuführung, aufweist.

9. Fügevorrichtung nach einem der vorherigen Ansprüche, **dadurch gekennzeichnet, dass** die Hubvorrichtung einen Linearmotor aufweist, der mittels einer Druckfeder vorspannbar ist.

10. Fügevorrichtung nach Anspruch 9, **dadurch gekennzeichnet, dass** der Linearmotor in der Hubstellung (HS) ausgefahren ist.

11. Verfahren zum Fügen, insbesondere zum Schweißen, von zwei Werkstücken (12, 32, 42, 44) aneinander, das die folgenden Schritte aufweist:
- Verfahren einer Fügeeinheit (22) relativ zu einem Fügekopf (10) in eine Hubstellung (HS) mittels einer Hubvorrichtung (20), um in Richtung einer Grundstellung (GS) der Fügeeinheit (22) die Werkstücke (12, 32, 42, 44) miteinander zu fügen, und
- Verfahren der Fügeeinheit (22) in die Grundstellung (GS),
**dadurch gekennzeichnet, dass**
- die Fügeeinheit (22) relativ zum Fügekopf (10) in die Hubstellung (HS) ausgefahren wird.

## Claims

1. Joining device (30, 40) for the joining, in particular the welding, of two workpieces (12, 32, 42, 44) one to the other, having
- a joining head (10) comprising a lift device (20) for linear transport of a joining unit (22) along a lift axis (HA) relative to the joining head, said joining device executing a joining operation by transporting the joining unit (22) out of a lift position (HS) towards a base position (GS), and said joining unit (22) comprising a boom (16) extending outside of the joining head (10), at the free end of which the joining operation takes place offset parallel to the lift axis (HA),
**characterized in that**
- the joining unit (22) is so oriented relative to the joining head (10) that the joining unit (22) is extended relative to the joining head (10) in the lift position (HS).

2. Joining device according to claim 1, **characterized in that** the joining unit (22) is further so oriented relative to the joining head (10) that the joining unit (22) is retracted into the joining head (10) in the base position (GS).

3. Joining device according to claim 1 or 2, **characterized in that** the joining unit (22) comprises a holding device (18) for holding one of the workpieces (12, 32, 42, 44).

4. Joining device according to claim 3, **characterized in that** a held workpieces (12, 32, 42, 44) is a bolt (12) and the holding device is a bolt holder (18).

5. Joining device according to any of the preceding claims, **characterized in that** the joining head (10) is a welding head.

6. Joining device according to any of the preceding claims, **characterized in that** the joining head (10) further comprises a support foot (34) projecting in the direction of joining.

7. Joining device according to any of the preceding claims, **characterized in that** the joining head (10) is mounted on a carriage (26).

8. Joining device according to any of the preceding claims, **characterized in that** the joining device (30, 40) further comprises a workpiece feed, in particular an elements feed.

9. Joining device according to any of the preceding claims, **characterized in that** the lift device comprises a linear motor pre-stressable by means of a compression spring.

10. Joining device according to claim 9, **characterized in that** the linear motor is extended in the lift position (HS).

11. Process for the joining, in particular the welding, of two workpieces (12, 32, 42, 44) one to the other, comprising the following steps:
- transporting a joining unit (22) relative to a joining head (10) into a lift position (HS) by means of a lifting device (20) in order to join the workpieces (12, 32, 42, 44) to each other in the direction of a base position (GS) of the joining unit (22), and
- transporting the joining unit (22) into the base position,
**characterized in that**
- the joining unit (22) is extended relative to the joining head (10) into the lift position (HS).

## Revendications

1. Dispositif d'assemblage (30, 40) pour l'assemblage, en particulier pour le soudage, de deux pièces (12, 32, 42, 44) l'une à l'autre, comprenant
- une tête d'assemblage (10), qui présente un dispositif de levage (20) pour le déplacement linéaire d'une unité d'assemblage (22) le long d'un axe de levage (HA) par rapport à la tête d'assemblage, le dispositif d'assemblage exécutant une opération d'assemblage par le déplacement de l'unité d'assemblage (22) d'une position de levage (HS) en direction d'une position de base (GS) et l'unité d'assemblage (22) présentant un bras (16) agencé à l'extérieur de la tête d'assemblage (10), sur l'extrémité libre duquel l'opération d'assemblage s'effectue avec un décalage parallèle par rapport à l'axe de levage (HA),
**caractérisé en ce que**
- l'unité d'assemblage (22) est orientée par rapport à la tête d'assemblage (10) de sorte que l'unité d'assemblage (22) est sortie dans la position de levage (HS) par rapport à la tête d'assemblage (10).

2. Dispositif d'assemblage selon la revendication 1, **caractérisé en ce que** l'unité d'assemblage (22) est orientée également par rapport à la tête d'assemblage (10) de telle sorte que l'unité d'assemblage (22) est rentrée dans la tête d'assemblage (10) dans la position de base (GS).

3. Dispositif d'assemblage selon la revendication 1 ou 2, **caractérisé en ce que** l'unité d'assemblage (22) présente un dispositif de retenue (18) pour la retenue de l'une des pièces (12, 32, 42, 44).

4. Dispositif d'assemblage selon la revendication 3, **caractérisé en ce qu'**une pièce (12, 32, 42, 44) retenue est un boulon (12) et le dispositif de retenue est un support de boulon (18).

5. Dispositif d'assemblage selon l'une quelconque des revendications précédentes, **caractérisé en ce que** la tête d'assemblage (10) est une tête de soudage.

6. Dispositif d'assemblage selon l'une quelconque des revendications précédentes, **caractérisé en ce que** la tête d'assemblage (10) présente également un pied de soutien (34) qui dépasse dans la direction d'assemblage.

7. Dispositif d'assemblage selon l'une quelconque des revendications précédentes, **caractérisé en ce que** la tête d'assemblage (10) est placée sur un coulisseau (26).

8. Dispositif d'assemblage selon l'une quelconque des revendications précédentes, **caractérisé en ce que** le dispositif d'assemblage (30, 40) présente également une arrivée de pièce et en particulier une arrivée d'éléments.

9. Dispositif d'assemblage selon l'une quelconque des revendications précédentes, **caractérisé en ce que** le dispositif de levage présente un moteur linéaire qui peut être précontraint au moyen d'un ressort de pression.

10. Dispositif d'assemblage selon la revendication 9, **caractérisé en ce que** le moteur linéaire est sorti dans la position de levage (HS).

11. Procédé pour l'assemblage, en particulier pour le soudage, de deux pièces (12, 32, 42, 44) entre elles, qui présente les étapes suivantes :
- déplacement d'une unité d'assemblage (22) par rapport à une tête d'assemblage (10) dans une position de levage (HS) au moyen d'un dispositif de levage (20), pour assembler entre elles les pièces (12, 32, 42, 44) dans la direction d'une position de base (GS) de l'unité d'assemblage (22), et
- déplacement de l'unité d'assemblage (22) dans la position de base (GS),
**caractérisé en ce que**
- l'unité d'assemblage (22) est sortie par rapport à la tête d'assemblage (10) dans la position de levage (HS).
